# EUROPEAN PATENT SPECIFICATION

(11) **EP 3 921 581 B1**
(45) Date of publication and mention of the grant of the patent: **19.06.2024**
(21) Application number: 20707355.2
(22) Date of filing: 03.02.2020
(51) Int. Cl.: F24D 17/00, F24D 17/02, F24D 3/08, F24D 3/18, F24D 5/12, F24F 12/00, F24F 5/00

(54) **HEAT RECOVERY VENTILATION SYSTEM**
BELÜFTUNGSSYSTEM MIT WÄRMERÜCKGEWINNUNG
SYSTÈME DE VENTILATION À RÉCUPÉRATION DE CHALEUR

(30) Priority: 06.02.2019 SE 1950137
(43) Date of publication of application: 15.12.2021
(73) Proprietor: Bas Air Energy Ab, 122 37 Enskede (SE)
(72) Inventor: MOBERG, Arne, 122 37 Enskede (SE); BREDELL, Stefan, 122 37 Enskede (SE); Claesson, Joachim, 134 62 Ingarö (SE)
(74) Representative: Bjerkén Hynell KB
(86) International application number: PCT/EP2020/052545
(87) International publication number: WO 2020/161041

(56) References cited:
- EP-A1- 2 620 715
- EP-A1- 3 165 838
- DE-A1-102005 002 282

## Description

### BACKGROUND OF THE INVENTION AND PRIOR ART

The present invention relates to a heat recovery ventilation system for a building according to the preamble of claim 1.

Generally, air in a building, such as a residential building or an office building, gradually becomes contaminated over time for various reasons, for instance by the respiration of people living or working in the building. The pollution degree of the indoor air is higher than the outdoor air due to, inter alia, emissions of particles, gases or heavy metals from materials used during construction of the building or from furniture or painted surfaces. Also dust or bacteria may be found in the indoor air. Therefore, it is important to replace the contaminated indoor air with fresh outdoor air continuously and with a relatively high flow to ensure a good indoor air quality. However, the fresh air needs to be heated or cooled to maintain the temperature of the indoor air, which requires energy.

Efforts have been made to develop ventilation and heating systems for heating and ventilating buildings in an efficient and cost-effective manner.

EP 2620715 is an example of a ventilation system with heat recovery. The system comprises an air/air heat exchanger for heat transfer between air from a heated space and inlet air to the space. The system comprises a refrigerant circuit arranged such that the heat in the exhaust air is also recovered by the refrigerant circuit to heat the inlet air or to heat water in a tank. The refrigerant circuit comprises a three way valve arranged to enable either heating of the inlet air or heating of water.

One disadvantage with the system described in EP 2620715 is that use of the three way valve effects negatively the reliability of the system because the valve may break during operation of the system. Another disadvantage is that heating of the inlet air may not be sufficient to provide good conditions for ventilation of the space when the three way valve is in a position for heating water.

It is therefore desirable to provide a heat recovery ventilation system that enable heating and ventilation of a building in an efficient way without need of using a three way valve as in the EP 2620715. The present invention set out below addresses this desire.

### SUMMARY OF THE INVENTION

One object of the present invention is to provide an improved heat recovery ventilation system arranged to enable heating and ventilating of a building in a more efficient manner comparing to systems known in the art without need of a three way valve.

The above mentioned object is achieved by the heat recovery ventilation system defined in claim 1. The system can also be defined as a heat and ventilation system with heat recovery as long as it comprises the features of claim 1.

Thus, the above mentioned object is achieved by a heat recovery ventilation system for a building, wherein the system comprises a primary heat exchanger arranged for heat recovery between an exhaust air flow from the building and an inlet air flow to the building. Thereby, by using the primary heat exchanger, heat in the exhaust air from the building can be transferred to the inlet air flow to the building and vice versa, i.e. heat in the inlet air flow to the building can be transferred to the exhaust air flow from the building. The first situation may correspond to heating of the building and the second situation may correspond to cooling of the building, for example during the summer time.

Furthermore, the system comprises an exhaust air conduit for conveying the exhaust air flow in an exhaust air flow direction and an inlet air conduit for conveying the inlet air flow in an inlet air flow direction.

Additionally, the system comprises a refrigerant circuit comprising a first heat exchanger and a second heat exchanger arranged for heat exchange between a refrigerant flowing in a refrigerant flow direction in the refrigerant circuit and the inlet air flow. Thereby, the refrigerant circuit is adapted for heat transfer between the refrigerant and the inlet air through the first heat exchanger and a second heat exchanger, i.e. both the first heat exchanger and a second heat exchanger may be used for transfer of heat between the refrigerant and the inlet air at the same time.

Further, the first heat exchanger is arranged on the inlet air conduit upstream the primary heat exchanger and the second heat exchanger is arranged on the inlet air conduit downstream the primary heat exchanger in the inlet air flow direction.

The refrigerant circuit in the system comprises also an expansion valve, an evaporator and a compressor, wherein the expansion valve and the evaporator are arranged downstream the first heat exchanger and the compressor is arranged downstream the evaporator and upstream the second heat exchanger in the refrigerant flow direction.

Further, the refrigerant circuit comprises at least a third heat exchanger and a fourth heat exchanger arranged for transfer of heat between the refrigerant and a first heat carrier flowing through the third heat exchanger and a second heat carrier flowing through the fourth heat exchanger. The third heat exchanger and the fourth heat exchanger are arranged downstream the compressor and upstream the second heat exchanger in the refrigerant flow direction. Thereby heat generated by the refrigerant circuit after the compressor may be transferred to the first heat carrier and to the second heat carrier flowing through the third heat exchanger and flowing through the fourth heat exchanger respectively.

Thus, while the first heat exchanger and the second heat exchanger are arranged to transfer of heat between the refrigerant and the inlet air flow, the third heat exchanger and a fourth heat exchanger are arranged to transfer of heat between the refrigerant and the first heat carrier and the second heat carrier respectively. In other words, the inlet air may be heated or cooled at the same time as the first heat carrier and the second heat carrier are heated or cooled. By this, the need of a three way valve is eliminated and thereby the reliability of the system is improved.

Consequently, an improved heat recovery ventilation system is provided, which enables heating and ventilating of a building in a more efficient way comparing to systems known in the art.

According to an embodiment the third heat exchanger is connected to a water heater via a water heating circuit arranged to convey the first heat carrier for heating water. Thus, water, such as tap water, may be heated by the first heat carrier.

According to an embodiment the fourth heat exchanger is connected to an air heater via an air heating circuit arranged to convey the second heat carrier for heating of air inside the building. Thus, air inside the building may be heated by the second heating circuit.

According to an embodiment the air heater comprises at least one radiator for being arranged inside the building.

According to an embodiment the third heat exchanger and the fourth heat exchanger are arranged in series in the refrigerant circuit. Advantageously, the third heat exchanger may be arranged upstream the fourth heat exchanger in the refrigerant circuit. Thereby, heating of water may be prioritized during operation of the system. In other words water may be heated prior to heating of air inside the building.

According to an embodiment the refrigerant circuit comprises a bypass conduit arranged to bypass at least a portion of the refrigerant past the third heat exchanger into the fourth heat exchanger. The bypass conduit may comprise an inlet, arranged downstream the compressor and upstream the third heat exchanger and an outlet arranged downstream the fourth heat exchanger. By this, at least a portion of the refrigerant in gas phase may be conveyed past the third heat exchanger into the fourth heat exchanger in order to enable condensation of the at least portion of the refrigerant in gas phase in the fourth heat exchanger. Thereby, depending on different needs regarding temperature, the refrigerant may be condensed both in the third heat exchanger and in the fourth heat exchanger. Thus an improved system is provided that may be adapted to different need.

According to an embodiment the third heat exchanger and the fourth heat exchanger are arranged in such a way that the refrigerant may be completely condensed immediately after at least the fourth heat exchanger during operation of the system. In other words, the third heat exchanger and the fourth heat exchanger are designed, inter alia, regarding to the size of the third heat exchanger and the fourth heat exchanger such that the refrigerant flowing in the refrigerant circuit is completely in a liquid phase immediately after, i.e. downstream, at least the fourth heat exchanger during operation of the system.

Thereby, the second heat exchanger and the first heat exchanger arranged downstream the fourth heat exchanger in the refrigerant flow direction may be designed as subcoolers, with respect to the refrigerant, which means that the second heat exchanger and the first heat exchanger may have a less complicated construction and/or a smaller size comparing to the third and/or fourth heat exchanger operating as condensers. Thereby, reliability of the system may be improved thanks to less complicated construction of the first heat exchanger and the second heat exchanger comparing to the third and/or fourth heat exchanger.

According to an embodiment the third heat exchanger and the fourth heat exchanger are arranged in such a way that condensation of the refrigerant may occur either in the third heat exchanger or in the fourth heat exchanger during operation of the system.

Condensation of the refrigerant in either the third heat exchanger or in the fourth heat exchanger may be controlled by, for example, different sizes of the third heat exchanger and the fourth heat exchanger. Thereby, the system may be adapted to different and specific needs regarding the output heat from the third heat exchanger and from the fourth heat exchanger.

Thus, an improved system is provided enabling flexibility regarding control of the system with respect to temperature out from the system and especially out from the third heat exchanger and the fourth heat exchanger.

According to an embodiment the system comprises a first sub-circuit arranged for heat transfer from a heat source to the evaporator. Thereby, heat from the heat source may be transferred to the evaporator via the first sub-circuit in order to evaporate the refrigerant flowing in the refrigerant circuit. The first sub-circuit enables improved control of an evaporation process of the refrigerant because the evaporation process may be controlled by a medium flowing in the first sub-circuit.

According to an embodiment the heat source comprises the ground and the first sub-circuit is configured for extending into and for being positioned at least partly positioned in the ground. Thereby, a position of the first sub-circuit may be in the ground through, for example, a borehole.

According to an embodiment the system comprises a secondary heat exchanger arranged on the exhaust air conduit downstream the primary heat exchanger in the exhaust air flow direction, wherein the secondary heat exchanger is arranged for transfer of heat from the exhaust air flow to the evaporator in the refrigerant circuit. Thus, energy in the exhaust air flow, after passing the primary heat exchanger, may be used and transferred to the evaporator by means of the secondary heat exchanger. Thereby, the efficiency of the system may be further improved because of a more complete use of energy in the exhaust air flow, which energy otherwise is not used.

According to an embodiment the system comprises a second sub-circuit, wherein the evaporator is connected to the secondary heat exchanger via the second sub-circuit. The second sub-circuit enables improved control of an evaporation process of the refrigerant in the evaporator because the evaporation process may be controlled by controlling flow of a medium in the second sub-circuit.

According to an embodiment the system is arranged to transfer of heat to the evaporator via the first sub-circuit and/or via the second sub-circuit. Thereby, depending on, for example, outer and/or in-house conditions, the evaporator may be connected to the secondary heat exchanger or to the heat source, or the evaporator may be connected to the secondary heat exchanger and simultaneously to the heat source. By this an improved system is provided enabling control of the system in an efficient and flexible manner.

According to an embodiment the secondary heat exchanger is connected to an outdoor air conduit arranged to convey outdoor air to the secondary heat exchanger, wherein the secondary heat exchanger is arranged for transfer of heat from the outdoor air to the evaporator in the refrigerant circuit. Thereby, outdoor air at a suitable temperature may be used as a further energy input to the system. Thus, an even more efficient heat recovery ventilation system may be provided.

### BRIEF DESCRIPTION OF THE DRAWINGS

In the following preferred embodiments of the invention are described with reference to the attached drawings, on which:

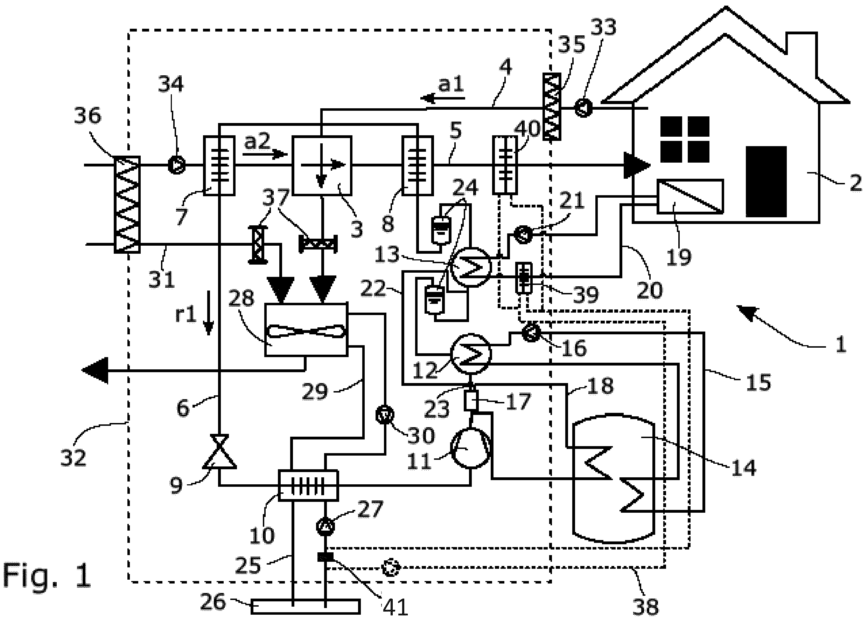

- Fig. 1: shows a schematic diagram of a heat recovery system according to an embodiment.

### DETAILLED DESCRIPTION OF PREFERRED EMBODIMENTS OF THE INVENTION

Fig. 1 shows a heat recovery ventilation system 1 for a building 2. The building 2 may be a residential building, an office building, a factory building or another kind of building where there is a need of ventilation. The system 1 comprises a primary heat exchanger 3 arranged for heat recovery between an exhaust air flow from the building 2 and an inlet air flow to the building 2. As illustrated in the Fig. 1, the exhaust air flow is conveyed through an exhaust air conduit 4 in an exhaust air flow direction a1 and the inlet air flow is conveyed through an inlet air conduit 5 in an inlet air flow direction a2. Thus, the exhaust air flow direction a1 corresponds to a direction from the building 2 and the inlet air flow direction a1 corresponds to a direction towards and into the building 2. Thereby, the system is used to replace air from the building 2 by new and fresh air from the outside.

Further, the heat recovery system 1 comprises a refrigerant circuit 6, which comprises a first heat exchanger 7 and a second heat exchanger 8 arranged for heat exchange between a refrigerant flowing in a refrigerant flow direction r1 in the refrigerant circuit 6 and the inlet air flow flowing through the inlet air conduit 5. Ammonia or sulfur dioxide are examples of the refrigerant in the refrigerant circuit. Other suitable refrigerants may also be used.

The first heat exchanger 7 is arranged on the inlet air conduit 5 upstream the primary heat exchanger 3 and the second heat exchanger 8 is arranged on the inlet air conduit 5 downstream the primary heat exchanger 3 in the inlet air flow direction a2. In other words the first heat exchanger 7, the primary heat exchanger 3 and the second heat exchanger 8 are arranged such that the inlet air flowing through the inlet air conduit 5 passes the mentioned heat exchangers 7, 3 and 8 in following order: the first heat exchanger 7, the primary heat exchanger 3 and the second heat exchanger 8. Thus, the inlet air is gradually heated or cooled during passage through the first heat exchanger 7, the primary heat exchanger 3 and the second heat exchanger 8

The refrigerant circuit 6 comprises an expansion valve 9, an evaporator 10 and a compressor 11, wherein the expansion valve 9 and the evaporator 10 are arranged downstream the first heat exchanger 7 and the compressor 11 is arranged downstream the evaporator 9 and upstream the second heat exchanger 8 in the refrigerant flow direction r1. The expansion valve 9, the evaporator 10 and the compressor 11 are common and well known elements of a refrigerant circuit and are arranged in a usual way to ensure well function of the refrigerant circuit 6 and are therefore not described in details herein.

The refrigerant circuit 6 further comprises at least a third heat exchanger 12 and a fourth heat exchanger 13 arranged for transfer of heat between the refrigerant in the refrigerant circuit 6 and a first heat carrier flowing through the third heat exchanger 12 and a second heat carrier flowing through the fourth heat exchanger 13. The third heat exchanger 12 and the fourth heat exchanger 13 are arranged downstream the compressor 11 and upstream the second heat exchanger 8 in the refrigerant flow direction r1. Thus, refrigerant in gas phase is compressed by the compressor 11 and thereby the temperature of the refrigerant increases in the compressor 11. The energy in form of heat is then transferred to the first heat carrier flowing through the third heat exchanger 12 and to the second heat carrier flowing through the fourth heat exchanger 13.

As illustrated in the Fig. 1, the third heat exchanger 12 is connected to a water heater, for example a water tank 14, via a water heating circuit 15 arranged to convey the first heat carrier for heating of water in the tank 14. The first heat carrier may be conveyed by using a pump 15, however as an alternative, the first heat carrier may also be conveyed by natural circulation in the water heating circuit 15 that is created as an effect of heating of the first heat carrier by the refrigerant in the third heat exchanger 12.

According to an embodiment, the refrigerant circuit 6 may further comprise a hot gas cooler 17, i.e. a fifth heat exchanger, arranged for heating of the top part of the water tank 14 through an additional water heating conduit 18 connected to the gas cooler 17 and to an upper area of the water tank 14.

Further, the fourth heat exchanger13 is connected to an air heater 19, which may for example be a radiator or several radiators, via an air heating circuit 20 arranged to convey the second heat carrier for heating of air inside the building 2. The second heat carrier may be conveyed by using a pump 21, however as an alternative, the second heat carrier may also be conveyed by natural circulation in the air heating circuit 20 that is created as an effect of heating of the second heat carrier by the refrigerant in the fourth heat exchanger 13.

The first heat carrier and the second heat carrier may for example be water.

The refrigerant circuit 6 may comprise a bypass conduit 22 arranged to bypass at least a portion of the refrigerant, flowing in the refrigerant circuit 6, past the third heat exchanger 12 into the fourth heat exchanger 13. The bypass conduit 22 may comprise an inlet arranged downstream the compressor 11 and upstream the third heat exchanger 12 and an outlet arranged downstream the third heat exchanger 12 and upstream the fourth heat exchanger 13. By this, at least a portion of the refrigerant in gas phase after the compressor 11 may be conveyed past the third heat exchanger 12 into the fourth heat exchanger 13 in order to enable condensation of the at least portion of the refrigerant in gas phase in the fourth heat exchanger 13. Thereby, depending on different needs regarding water temperature and air temperature inside the building 2, the refrigerant may be condensed both in the third heat exchanger 12 and in the fourth heat exchanger 13 when using the bypass conduit 22.

The refrigerant circuit 6 may further comprise a bypass valve 23 to control the flow of the at least a portion of the refrigerant through the bypass conduit 22. The bypass valve 23 may, for example, be a manually or an automatically adjustable shuttle valve. As an alternative to the bypass valve 23 the refrigerant circuit 6 may comprise throttle valves arranged such that a first throttle valve is arranged on the bypass conduit 22 and a second throttle valve is arranged downstream the third heat exchanger 12 in the refrigerant flow direction r1. By using the shuttle valve or the throttle valves as above the reliability of the system 1 may be further improved.

Thus, by adjusting the bypass valve 23, i.e. by positioning the bypass valve 23 in different positions, or by adjusting the throttle valves, different operating condition of the system may be chosen. For example, by closing the bypass conduit 22, the entire amount of the refrigerant may be conveyed through the third heat exchanger 12 and later after the third heat exchanger 12 also through the fourth heat exchanger 13. By this a connection in series between the third heat exchanger 12 and the fourth heat exchanger 13 is created. Alternatively, the bypass conduit 22 may be opened to some extent by positioning the bypass valve 23 to a position that enables conveying of a portion of the refrigerant through the bypass conduit 22 and the fourth heat exchanger 13 and another portion of the refrigerant through the third heat exchanger 12. According to yet further alternative, the bypass valve 23 may be adjusted such that the entire amount of the refrigerant is conveyed through the bypass conduit 22 and later through the fourth heat exchanger 13. The pump 16 in the water heating circuit 15 may also be used to control the condensation process of the refrigerant in third heat exchanger 12 and/or in the fourth heat exchanger 13, by controlling the flow of the first heat carrier in the water heating circuit 15. Thus, both the bypass valve 23 and the pump 16 in the water heating circuit 15 may be used to control the condensation in the third heat exchanger 12 and/or in the fourth heat exchanger 13.

The sizes and design of the third heat exchanger 12 and the fourth heat exchanger 13 are adapted to control the temperature of the refrigerant in the refrigerant circuit 6 such that the refrigerant is completely condensed immediately after at least the fourth heat exchanger 13 during operation of the system 1. This may even be controlled by controlling the pumps 16 and/or 21 in order to control the flow ration of the first heat carrier and the second heat carrier in the water heating circuit 15 and in the air heating circuit 20 respectively.

The refrigerant circuit 6 may further comprise one or several receivers 24. According to some embodiments, the refrigerant circuit 6 comprises two receivers 24, one arranged downstream the third heat exchanger 12 and another one arranged downstream the fourth heat exchanger 13. As an alternative, one receiver arranged downstream the fourth heat exchanger 13 may be used. The receiver or receivers 24 are used to regulate the pressure in the refrigerant circuit 6 and especially to prevent that pressure in the refrigerant circuit exceeds overpressure, i.e. exceeds a certain level of pressure.

The third heat exchanger 12 and the fourth heat exchanger 13 are arranged in such a way that condensation of the refrigerant occurs either in the third heat exchanger 12 or in the fourth heat exchanger 13 during operation of the system. The condensation of the refrigerant in the third heat exchanger 12 and/or the fourth heat exchanger 13 occurs depending on temperature in the tank 14, i.e. depending on water temperature, which water is heated by using the water heating circuit 15. When water temperature has reached a desired level, no condensation occurs in the third heat exchanger 12 and the refrigerant is then condensed in the fourth heat exchanger 13. The pump 16 in the water heating circuit 15 may be used to control the condensation process of the refrigerant in third heat exchanger 12 and/or in the fourth heat exchanger 13 because the flow created by the pump 16 affects the heat transfer between the refrigerant and the first heat carrier flowing in the water heating circuit 15.

As illustrated in Fig. 1, the system 1 comprises a first sub-circuit 25 arranged for heat transfer from a heat source 26 to the evaporator 10. Thereby, the heat source 26 may be used for providing the refrigerant circuit 6, and especially the evaporator 10 with energy. The heat source 26 may comprise the ground and the first sub-circuit 25 may extend into and may be at least partly positioned in the ground. A pump 27 may be used in the first sub-circuit 25 for creating a flow of a medium in the first sub-circuit 25 flowing between the heat source 26 and the evaporator 10.

The system may comprise a secondary heat exchanger 28 arranged on the exhaust air conduit 4 downstream the primary heat exchanger 3 in the exhaust air flow direction, wherein the secondary heat exchanger 28 is arranged for transfer of heat from the exhaust air flow to the evaporator 10 in the refrigerant circuit 6. As illustrated in Fig. 1, the system 1 comprises a second sub-circuit 29 with a pump 30 for creating a flow of a medium in the second sub circuit 29. The evaporator 10 is then connected to the secondary heat exchanger 28 via the second sub-circuit 29. Thereby, the evaporator may be provided with energy from the exhaust air flow by the secondary heat exchanger 28 and through the second sub-circuit 29.

When the evaporator 10 is connected to the first sub-circuit 25 and to the second sub-circuit 29, the transfer of heat to the evaporator 10 may be done via the first sub-circuit 25 or via the second sub-circuit 29 or via both the first sub-circuit 25 and the second sub-circuit 30. Thus, an improved heat recovery ventilation system is provided that enables providing the evaporator 10 with heat either from the heat source 26 and/or from the exhaust air flow from the building 2.

According to an embodiment the secondary heat exchanger 28 may be connected to an outdoor air conduit 31 arranged to convey outdoor air to the secondary heat exchanger 28. Thereby, outdoor air at a suitable temperature may be used as a further energy input to the secondary heat exchanger 28 and thereby to the evaporator 10 and to the system 1.

As an additional information the part 32 of the system 1, marked with dashed line and comprising the elements as illustrated in the Fig. 1 and described above, may be arranged as an outside unit of the system 1 and may be adapted to be mounted outside of the building 2, for example on a wall of the building 2.

Further, the system 1 may comprise an exhaust fan 33, an inlet air fan 34, an exhaust air filter 35, an inlet air filter 36 and throttles 37 arranged to control the flow of the exhaust air and the flow of the outdoor air into the secondary heat exchanger 28.

As an alternative, the first sub-circuit 25 may be connected to an additional subsystem 38 arranged primary for cooling of the building 2. The same medium is used in the additional subsystem 38 as in the first sub-circuit 25, which the medium is pumped to a first additional heat exchanger 39 for heat exchange with the air heating circuit 20 and to a second additional heat exchanger 40 for heat exchange with the inlet air flowing through the inlet air conduit 5. A check valve 41 in the first sub-circuit 25 is then arranged upstream the pump 27 to prevent the medium to flow back to the ground 26. The first sub-circuit 25 and the second sub-circuit 29 comprise further check valves arranged in a common way in the direction of pumps 27 and 30 and configured to ensure the proper function of the first sub-circuit 25 and the second sub-circuit 29

The invention is not restricted to the described embodiment but may be varied freely within the scope of the claims.

## Claims

1. A heat recovery ventilation system (1) for a building, wherein the system (1) comprises:
a primary heat exchanger (3) arranged for heat recovery between an exhaust air flow from said building and an inlet air flow to said building, wherein the system (1) comprises an exhaust air conduit (4) for conveying the exhaust air flow in an exhaust air flow direction (a1) and an inlet air conduit (5) for conveying the inlet air in an inlet air flow direction (a2) and
a refrigerant circuit (6) comprising a first heat exchanger (7) and a second heat exchanger (8) arranged for heat exchange between a refrigerant flowing in a refrigerant flow direction (r1) in said refrigerant circuit (6) and the inlet air flow, wherein said first heat exchanger (7) is arranged on the inlet air conduit (5) upstream said primary heat exchanger (3) and said second heat exchanger (8) is arranged on the inlet air conduit (5) downstream said primary heat exchanger (3) in the inlet air flow direction (a2),
wherein the refrigerant circuit (6) comprises an expansion valve (9), an evaporator (10) and a compressor (11), wherein the expansion valve (9) and the evaporator (10) are arranged downstream said first heat exchanger (7) and the compressor (11) is arranged downstream said evaporator (10) and upstream said second heat exchanger (8) in the refrigerant flow direction,
**characterized in that**
the refrigerant circuit (6) further comprises at least a third heat exchanger (12) and a fourth heat exchanger (13) arranged for transfer of heat between the refrigerant and a first heat carrier flowing through the third heat exchanger (12) and a second heat carrier flowing through the fourth heat exchanger (13), wherein the third heat exchanger (12) and the fourth heat exchanger (13) are arranged downstream said compressor (11) and upstream said second heat exchanger (8) in the refrigerant flow direction (r1).

2. The system (1) according to claim 1, wherein the third heat exchanger (12) is connected to a water heater (14) via a water heating circuit (15) arranged to convey the first heat carrier for heating water.

3. The system (1) according to claim 1 or 2, wherein the fourth heat exchanger (13) is connected to an air heater (19) via an air heating circuit (20) arranged to convey the second heat carrier for heating of air inside the building.

4. The system (1) according to claim 3, wherein the air heater (19) comprises at least one radiator for being arranged inside said building.

5. The system (1) according to any of claims 1 to 4, wherein the third heat exchanger (12) and the fourth heat exchanger (13) are arranged in series in the refrigerant circuit (6).

6. The system (1) according to any of claims 1 to 5, wherein the refrigerant circuit (6) comprises a bypass conduit (22) arranged to bypass at least a portion of the refrigerant past the third heat exchanger (12) into the fourth heat exchanger (13).

7. The system (1) according to any of claims 1 to 6, wherein the third heat exchanger (12) and the fourth heat exchanger (13) are arranged in such a way that the refrigerant may be completely condensed immediately after at least the fourth heat exchanger (13) during operation of the system (1).

8. The system (1) according to any of claims 1 to 7, wherein the third heat exchanger (12) and the fourth heat exchanger (13) are arranged in such a way that condensation of the refrigerant may occur either in the third heat exchanger (12) or in the fourth heat exchanger (13) during operation of the system (1).

9. The system (1) according to any of claims 1 to 8, comprising a first sub-circuit (25) arranged for heat transfer from a heat source (26) to said evaporator (10).

10. The system (1) according to claim 9, wherein the heat source comprises the ground (26) and wherein said first sub-circuit (25) is configured for extending into and for being positioned at least partly in the ground (26).

11. The system (1) according to any of claims 1 to 10, comprising a secondary heat exchanger (28) arranged on said exhaust air conduit (4) downstream said primary heat exchanger (3) in the exhaust air flow direction (a1), wherein the secondary heat exchanger (28) is arranged for transfer of heat from the exhaust air flow to the evaporator (10) in the refrigerant circuit (6).

12. The system (1) according to claim 11, comprising a second sub-circuit (29), wherein the evaporator (10) is connected to the secondary heat exchanger (28) via said second sub-circuit (29).

13. The system (1) according to claim 9 or 12, wherein said system is arranged to transfer of heat to the evaporator (10) via said first sub-circuit (25) and/or via said second sub-circuit (29).

14. The system (1) according to any of claims 11 to 13, wherein said secondary heat exchanger (28) is connected to an outdoor air conduit (31) arranged to convey outdoor air to said secondary heat exchanger (28), wherein the secondary heat exchanger (28) is arranged for transfer of heat from the outdoor air to the evaporator (10) in the refrigerant circuit (6).

## Patentansprüche

1. Belüftungssystem (1) mit Wärmerückgewinnung für ein Gebäude, wobei das System (1) Folgendes umfasst:
einen Hauptwärmetauscher (3), der zur Wärmerückgewinnung zwischen einem Abluftstrom des Gebäudes und einem Zuluftstrom des Gebäudes angeordnet ist, wobei das System (1) eine Abluftleitung (4) zum Leiten des Abluftstroms in einer Abluftströmungsrichtung (a1) und eine Zuluftleitung (5) zum Leiten der Zuluft in einer Zuluftströmungsrichtung (a2) umfasst und
einen Kältemittelkreislauf (6), der einen ersten Wärmetauscher (7) und einen zweiten Wärmetauscher (8), die zum Wärmetausch zwischen einem in einer Kältemittelströmungsrichtung (r1) in dem Kältemittelkreislauf (6) strömenden Kältemittel und dem Zuluftstrom angeordnet sind, umfasst, wobei, in der Zuluftströmungsrichtung (a2), der erste Wärmetauscher (7) dem Hauptwärmetauscher (3) auf der Zuluftleitung (5) vorgeschaltet ist und der zweite Wärmetauscher (8) dem Hauptwärmetauscher (3) auf der Zuluftleitung (5) nachgeschaltet ist,
wobei der Kältemittelkreislauf (6) ein Expansionsventil (9), einen Verdampfer (10) und einen Kompressor (11) umfasst, wobei, in der Kältemittelströmungsrichtung, das Expansionsventil (9) und der Verdampfer (10) dem ersten Wärmetauscher (7) nachgeschaltet sind und der Kompressor (11) dem Verdampfer (10) nachgeschaltet und dem zweiten Wärmetauscher (8) vorgeschaltet ist,
**dadurch gekennzeichnet, dass**
der Kältemittelkreislauf (6) ferner mindestens einen dritten Wärmetauscher (12) und einen vierten Wärmetauscher (13) umfasst, die zur Wärmeübertragung zwischen dem Kältemittel und einem ersten Wärmeträger, der durch den dritten Wärmetauscher (12) strömt, sowie einem zweiten Wärmeträger, der durch den vierten Wärmetauscher (13) strömt, angeordnet sind, wobei, in der Kühlmittelströmungsrichtung (r1), der dritte Wärmetauscher (12) und der vierte Wärmetauscher (13) dem Kompressor (11) nachgeschaltet und dem zweiten Wärmetauscher (8) vorgeschaltet sind.

2. System (1) nach Anspruch 1, wobei der dritte Wärmetauscher (12) über einen Wasserheizkreislauf (15), der zum Übertragen des ersten Wärmeträgers zum Heizen von Wasser angeordnet ist, mit einer Wasserheizung (14) verbunden ist.

3. System (1) nach Anspruch 1 oder 2, wobei der vierte Wärmetauscher (13) über einen Luftheizkreislauf (20), der zum Leiten des zweiten Wärmeträgers zum Heizen von Luft innerhalb des Gebäudes angeordnet ist, mit einer Luftheizung (19) verbunden ist.

4. System (1) nach Anspruch 3, wobei die Luftheizung (19) mindestens einen Heizkörper, um innerhalb des Gebäudes angeordnet zu sein, umfasst.

5. System (1) nach einem der Ansprüche 1 bis 4, wobei der dritte Wärmetauscher (12) und der vierte Wärmetauscher (13) in Reihe in dem Kältemittelkreislauf (6) angeordnet sind.

6. System (1) nach einem der Ansprüche 1 bis 5, wobei der Kältemittelkreislauf (6) eine Bypass-Leitung (22) zum Umleiten zumindest eines Abschnitts des Kältemittels an dem dritten Wärmetauscher (12) vorbei in den vierten Wärmetauscher (13) hinein umfasst.

7. System (1) nach einem der Ansprüche 1 bis 6, wobei der dritte Wärmetauscher (12) und der vierte Wärmetauscher (13) derart angeordnet sind, dass, während des Betriebs des Systems (1), das Kältemittel unmittelbar nach zumindest dem vierten Wärmetauscher (13) vollständig kondensiert sein kann.

8. System (1) nach einem der Ansprüche 1 bis 7, wobei der dritte Wärmetauscher (12) und der vierte Wärmetauscher (13) derart angeordnet sind, dass, während des Betriebs des Systems (1), Kondensation des Kältemittels entweder in dem dritten Wärmetauscher (12) oder in dem vierten Wärmetauscher (13) erfolgen kann.

9. System (1) nach einem der Ansprüche 1 bis 8, umfassend einen ersten Teilkreislauf (25), der zur Wärmeübertragung von einer Wärmequelle (26) zu dem Verdampfer (10) angeordnet ist.

10. System (1) nach Anspruch 9, wobei die Wärmequelle den Grund (26) umfasst und wobei der erste Teilkreislauf (25) dazu ausgestaltet ist, sich in den Grund (26) hinein zu erstrecken und zumindest teilweise im Selbigen positioniert zu sein.

11. System (1) nach einem der Ansprüche 1 bis 10, umfassend einen Nebenwärmetauscher (28), der in der Abluftströmungsrichtung (a1) dem Hauptwärmetauscher (3) nachgeschaltet auf der Abluftleitung (4) angeordnet ist, wobei der Nebenwärmetauscher (28) zur Wärmeübertragung von dem Abluftstrom zu dem Verdampfer (10) in dem Kältemittelkreislauf (6) angeordnet ist.

12. System (1) nach Anspruch 11, umfassend einen zweiten Teilkreislauf (29), wobei der Verdampfer (10) über den zweiten Teilkreislauf (29) mit dem Nebenwärmetauscher (28) verbunden ist.

13. System (1) nach Anspruch 9 oder 12, wobei das System dazu angeordnet ist, Wärme über den ersten Teilkreislauf (25) und/oder über den zweiten Teilkreislauf (29) an den Verdampfer (10) zu übertragen.

14. System (1) nach einem der Ansprüche 11 bis 13, wobei der Nebenwärmetauscher (28), mit einer Außenluftleitung (31), der dazu angeordnet ist, Außenluft an den Nebenwärmetauscher (28) zu übertragen, verbunden ist, wobei der Nebenwärmetauscher (28) zur Wärmeübertragung von der Außenluft zu dem Verdampfer (10) in dem Kältemittelkreislauf (6) angeordnet ist.

## Revendications

1. Système de ventilation à récupération de chaleur (1) pour un bâtiment, dans lequel le système (1) comprend :
un échangeur de chaleur primaire (3) agencé pour une récupération de chaleur entre un écoulement d'air d'évacuation provenant dudit bâtiment et un écoulement d'air d'entrée vers ledit bâtiment, dans lequel le système (1) comprend un conduit d'air d'évacuation (4) pour acheminer l'écoulement d'air d'évacuation dans une direction d'écoulement d'air d'évacuation (a1) et un conduit d'air d'entrée (5) pour acheminer l'air d'entrée dans une direction d'écoulement d'air d'entrée (a2) et
un circuit frigorifique (6) comprenant un premier échangeur de chaleur (7) et un deuxième échangeur de chaleur (8) agencés pour un échange de chaleur entre un fluide frigorigène s'écoulant dans une direction d'écoulement de fluide frigorigène (r1) dans ledit circuit frigorifique (6) et l'écoulement d'air d'entrée, dans lequel ledit premier échangeur de chaleur (7) est agencé sur le conduit d'air d'entrée (5) en amont dudit échangeur de chaleur primaire (3) et ledit deuxième échangeur de chaleur (8) est agencé sur le conduit d'air d'entrée (5) en aval dudit échangeur de chaleur primaire (3) dans la direction d'écoulement d'air d'entrée (a2), dans lequel le circuit frigorifique (6) comprend une vanne de détente (9), un évaporateur (10) et un compresseur (11), dans lequel la vanne de détente (9) et l'évaporateur (10) sont agencés en aval dudit premier échangeur de chaleur (7) et le compresseur (11) est agencé en aval dudit évaporateur (10) et en amont dudit deuxième échangeur de chaleur (8) dans la direction d'écoulement de fluide frigorigène, **caractérisé en ce que**
le circuit frigorifique (6) comprend en outre au moins un troisième échangeur de chaleur (12) et un quatrième échangeur de chaleur (13) agencés pour le transfert de chaleur entre le fluide frigorigène et un premier caloporteur circulant à travers le troisième échangeur de chaleur (12) et un deuxième caloporteur circulant à travers le quatrième échangeur de chaleur (13), dans lequel le troisième échangeur de chaleur (12) et le quatrième échangeur de chaleur (13) sont agencés en aval dudit compresseur (11) et en amont dudit deuxième échangeur de chaleur (8) dans la direction d'écoulement de fluide frigorigène (r1) .

2. Système (1) selon la revendication 1, dans lequel le troisième échangeur de chaleur (12) est raccordé à un chauffe-eau (14) par l'intermédiaire d'un circuit de chauffage d'eau (15) agencé pour acheminer le premier caloporteur pour chauffer l'eau.

3. Système (1) selon la revendication 1 ou 2, dans lequel le quatrième échangeur de chaleur (13) est raccordé à un réchauffeur d'air (19) par l'intermédiaire d'un circuit de chauffage d'air (20) agencé pour acheminer le deuxième caloporteur pour chauffer l'air à l'intérieur du bâtiment.

4. Système (1) selon la revendication 3, dans lequel le réchauffeur d'air (19) comprend au moins un radiateur destiné à être agencé à l'intérieur dudit bâtiment.

5. Système (1) selon l'une quelconque des revendications 1 à 4, dans lequel le troisième échangeur de chaleur (12) et le quatrième échangeur de chaleur (13) sont agencés en série dans le circuit frigorifique (6).

6. Système (1) selon l'une quelconque des revendications 1 à 5, dans lequel le circuit frigorifique (6) comprend un conduit de dérivation (22) agencé pour dériver au moins une partie du fluide frigorigène au-delà du troisième échangeur de chaleur (12) dans le quatrième échangeur de chaleur (13).

7. Système (1) selon l'une quelconque des revendications 1 à 6, dans lequel le troisième échangeur de chaleur (12) et le quatrième échangeur de chaleur (13) sont agencés de telle sorte que le fluide frigorigène peut être complètement condensé immédiatement après au moins le quatrième échangeur de chaleur (13) pendant le fonctionnement du système (1).

8. Système (1) selon l'une quelconque des revendications 1 à 7, dans lequel le troisième échangeur de chaleur (12) et le quatrième échangeur de chaleur (13) sont agencés de telle sorte que la condensation du fluide frigorigène peut se produire soit dans le troisième échangeur de chaleur (12) soit dans le quatrième échangeur de chaleur (13) pendant le fonctionnement du système (1).

9. Système (1) selon l'une quelconque des revendications 1 à 8, comprenant un premier sous-circuit (25) agencé pour un transfert de chaleur d'une source de chaleur (26) vers ledit évaporateur (10) .

10. Système (1) selon la revendication 9, dans lequel la source de chaleur comprend le sol (26) et dans lequel ledit premier sous-circuit (25) est configuré pour s'étendre dans et pour être positionné au moins partiellement dans le sol (26).

11. Système (1) selon l'une quelconque des revendications 1 à 10, comprenant un échangeur de chaleur secondaire (28) agencé sur ledit conduit d'air d'évacuation (4) en aval dudit échangeur de chaleur primaire (3) dans la direction d'écoulement d'air d'évacuation (a1), dans lequel l'échangeur de chaleur secondaire (28) est agencé pour transférer la chaleur depuis l'écoulement d'air d'évacuation vers l'évaporateur (10) dans le circuit frigorifique (6).

12. Système (1) selon la revendication 11, comprenant un deuxième sous-circuit (29), dans lequel l'évaporateur (10) est raccordé à l'échangeur de chaleur secondaire (28) par l'intermédiaire dudit deuxième sous-circuit (29).

13. Système (1) selon la revendication 9 ou 12, dans lequel ledit système est agencé pour transférer de la chaleur à l'évaporateur (10) par l'intermédiaire dudit premier sous-circuit (25) et/ou par l'intermédiaire dudit deuxième sous-circuit (29).

14. Système (1) selon l'une quelconque des revendications 11 à 13, dans lequel ledit échangeur de chaleur secondaire (28) est raccordé à un conduit d'air extérieur (31) agencé pour acheminer l'air extérieur vers ledit échangeur de chaleur secondaire (28), dans lequel l'échangeur de chaleur secondaire (28) est agencé pour transférer la chaleur provenant de l'air extérieur vers l'évaporateur (10) dans le circuit frigorifique (6).
